# EUROPEAN PATENT APPLICATION

(11) **EP 4 005 976 A1**
(43) Date of publication of application: **01.06.2022**
(21) Application number: 20846205.1
(22) Date of filing: 28.07.2020
(51) Int. Cl.: C01B 32/05, H01M 4/88

(54) **CARBON ELECTRODE MATERIAL AND METHOD FOR PREPARING SAME**

(30) Priority: 29.07.2019 US 201962879544 P
(71) Applicant: LG Electronics Inc., SEOUL 07336 (KR); Gwangju Institute of Science and Technology, Gwangju 61005 (KR)
(72) Inventor: CHANG, Myeongsoo, Seoul 06772 (KR); OH, Byungsoo, Seoul 06772 (KR); CHOI, Changhyuck, Gwangju 61005 (KR); CHOI, Hansol, Gwangju 61005 (KR)
(74) Representative: Vossius & Partner Patentanwälte Rechtsanwälte mbB
(86) International application number: PCT/KR2020/009957
(87) International publication number: WO 2021/020867

(57) **Abstract**

Provided according to an embodiment are a carbon electrode material and a method for preparing same. The method comprises the steps: mixing a carbon precursor powder, a molding powder, and a metal precursor powder to form a mixed powder; and thermally treating the mixed powder to form a nitrogen-doped carbon composite, wherein: the molding powder includes a metal-organic framework (MOF); the carbon precursor powder is contained in an amount of 10 wt% to 20 wt% on the basis of the total mixed powder; the molding powder is contained in an amount of 50 wt% to 80 wt% on the basis of the total mixed powder; the metal precursor powder is contained in an amount of 0.1 wt% to 5 wt% on the basis of the total mixed powder; and the carbon composite has a monoatomic or nanometer-unit sized metal located therein.

## Description

### [Technical Field]

Embodiments relate to a carbon electrode material and a method of preparing the same.

### [Background Art]

Recently, interest in energy storage technology has increased.

Efforts for research and development of electrochemical devices have become more concrete as a field of application has expanded to cell phones, camcorders, notebook PCs, and even energy of electric vehicles.

An electrochemical device is to enable conversion between electrical energy and chemical energy and for example includes a super capacitor (an electric double layer capacitor, and an EDLC), a lithium ion secondary battery, and a hybrid capacitor.

Such an electrochemical device includes an anode and a cathode impregnated in an electrolyte, and a separator provided between the two electrodes, and electrode materials of the anode and the cathode include a metal catalyst for high electrical properties.

In order to maximize utilization of expensive metal, research has been conducted to disperse metal into small sizes. In particular, monoatomic, nanometer, or sub-nanometer size metal catalysts have different catalytic activity due to different electrical properties from typical metal catalysts as well as high metal dispersibility.

These catalysts have attracted much attention because of their extremely limited active sites and unique chemoselectivity compared with a catalyst with a metal cluster with multiple active sites. However, small size metals, especially monoatomic size metals, are very unstable because the metals tend to aggregate to maximize surface energy thereof. Accordingly, a monoatomic size metal catalyst may be synthesized only by using a catalyst carrier for stabilizing even monoatomic size metal due to strong bonding with metal.

Monoatomic, nanometer, or sub-nanometer size metal catalysts have unique catalytic activity and reactivity in various reactions such as gas phase reaction, liquid phase reaction, and electrochemical reaction because of different electrical properties and limited active sites compared with typical metal.

However, since a catalyst carrier for stabilizing even monoatomic size metal due to strong bonding with metal is mostly an insulator or a semiconductor, the catalyst carrier has low electrical conductivity and is unstable under an electrochemical experimental condition, and thus it is almost impossible to apply a nanometer size metal catalyst supported on the carrier to electrochemical reaction. Accordingly, in order to apply the monoatomic size metal catalyst to electrochemical reaction, a carbon-based material may be used as the catalyst carrier.

The carbon carrier has a physically and chemically stable structure due to an extensive sp hybridization network between carbon atoms and has high electrical conductivity.

In order to support a metal catalyst on the carbon carrier, a process of forming the carbon carrier using a template and then removing the template is required. Then, a carbon electrode material including the carbon carrier for supporting the metal catalyst may be lastly prepared by heat-treating the metal catalyst on the carbon carrier from which the template is removed.

That is, a separate pretreatment process of removing is required to support the metal catalyst on the carbon carrier, and thus, there is a problem in that manufacturing process efficiency of the carbon electrode material is lowered.

Accordingly, there is a need for a carbon electrode material having a new structure and a preparation method thereof for overcoming the above problem and improving process efficiency.

### [Disclosure]

### [Technical Problem]

Embodiments provide a carbon electrode material prepared by performing once a synthesis process of synthesizing a carbon precursor, a metal precursor, and a template precursor at one time, and a method of preparing the carbon electrode material.

### [Technical Solution]

In a carbon electrode material and a method of preparing the same according to embodiments, the method includes forming mixed powder by mixing carbon precursor powder, template powder, and metal precursor powder, and forming a nitrogen-doped carbon composite by heat-treating the mixed powder, wherein the template powder includes a metal-organic framework (MOF), the carbon precursor powder are in the range of 10 wt% to 20 wt% based on a total weight of the mixed powder, the template powder are in the range of 50 wt% to 80 wt% based on the total weight of the mixed powder, the metal precursor powder are in the range of 0.1 wt% to 5 wt% based on the total weight of the mixed powder, and monoatomic or nanometer size metal is supported on the carbon composite.

### [Advantageous Effects]

In a method of preparing a carbon electrode material according to an embodiment, a process of removing a template of a carbon composite may be omitted.

In detail, since zinc (Zn) included in template powder has a low melting point and boiling point, when the mixed powder is synthesized, the template powder may be volatilized, and a metal ion of the metal precursor included in the mixed powder may be bonded to the template powder.

That is, the shape of the template powder may collapse during a process of heat-treating the mixed powder, and a site for a metal ion of the metal precursor powder to enter the template powder may be provided, and accordingly, a separate process of removing template may be omitted.

The metal ion may be bonded to a site from which the zinc (Zn) ion is removed, and accordingly the stability of the metal ion inside the carbon composite may be ensured.

Accordingly, in the method of preparing a carbon electrode material according to an embodiment, a preparation process may be easily performed, and a monoatomic or nanometer size metal may be stably supported, and accordingly, the carbon electrode material prepared using the method may have improved properties.

### [Description of Drawings]

Fig. 1 is a diagram for explaining a flowchart of a process of a carbon electrode material according to an embodiment.
Figs. 2 and 3 are diagrams showing a high-resolution electron microscope (HAADF-STEM) analysis result of a carbon electrode material according to an embodiment.
Figs. 4 to 8 are diagrams showing an XAFS analysis result of a carbon electrode material according to an embodiment.
Fig. 9 is a graph showing a glucose oxidation reaction experiment of a carbon electrode material according to an embodiment.

### [Best Mode]

The present disclosure will now be described more fully with reference to the accompanying drawings, in which exemplary embodiments of the present disclosure are shown. However, the technical spirit of the present disclosure is formed in many different forms and should not be construed as being limited to the embodiments set forth herein. One or more of the components may be selectively combined and replaced between embodiments within the scope of the technical spirit of the present disclosure.

All terms (including technical or scientific terms) used in embodiments of the present disclosure have the same meanings as generally understood by a person having ordinary skill in the art to which the present disclosure pertains unless mentioned otherwise. Generally used terms, such as terms defined in a dictionary, should be interpreted as meanings of the related art from the context.

The term used herein is for the purpose of describing particular embodiments only, and is not intended to be limiting of the present disclosure. In this disclosure, an expression in the singular encompasses the expression in the plural, unless it has a clearly different meaning in context, and the expressions "at least one (or one or more) of A, B, and, C" may include any and all combinations of A, B, and C.

It will be understood that, although the terms "first", "second", "A", "B", "(a)", "(b)", etc. may be used herein to describe various elements of the present disclosure, these terms are only used to distinguish one element from another element, and the essential order or sequence of corresponding elements is not limited by these terms.

It will be understood that when one element is referred to as being "connected to", "coupled to", or "accessing" another element, the one element may be "connected to" or "coupled to" or "access" the other element via a further element, or the one element may be directly connected to or directly access another element.

In description of exemplary embodiments, it will be understood that, when an element is referred to as being "on" or "under" another element, the element can be directly on another element or intervening elements may be present.

In addition, when an element is referred to as being "on" or "under" another element, this may include the meaning of an upward direction or a downward direction based on one component.

Hereinafter, a method of preparing a carbon electrode material according to an embodiment will be described with reference to the accompanying drawings.

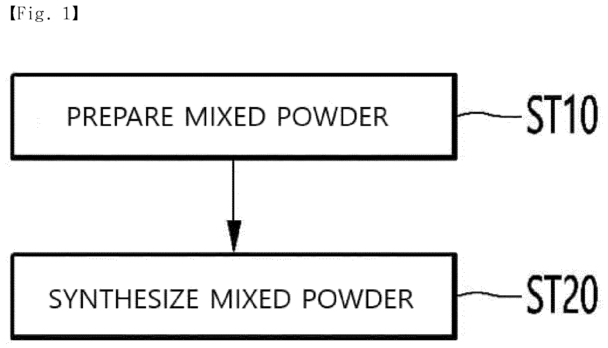

Referring to Fig. 1, the method of preparing a carbon electrode material according to an embodiment may include preparing mixed powder (ST10) and synthesizing the mixed powder (ST20).

In the preparing the mixed powder (ST10), first powder, second powder, and third powder may be mixed to prepare the mixed powder.

The first powder may include carbon precursor powder. For example, a carbon-based precursor of the first powder may include at least one of glucose, sucrose, fructose, benzene, naphthalene, anthracene, phenanthrene, pyrene, phenolformaldehyde (PF) resin, resorcinol-formaldehyde (RF) resin, ureaformaldehyde (UF) resin, quinoxaline, propylenediamine, 4,4'-dipyridyl, phenanthroline, p-toluenesulfonic acid, or furfurylmercaptan.

In detail, the first powder may include carbon precursor powder including nitrogen. In more detail, the first powder may include o-phenanthroline (1,10-phenanthrolin) defined using the following structural formula.

Since the first powder includes the carbon precursor powder including nitrogen, a carbon electrode material that is then prepared by synthesizing the mixed powder may be formed as a nitrogen-doped carbon electrode material.

As the carbon electrode material includes nitrogen, the stability of the third powder described below may be secured. In detail, metal of the third powder may be stably bonded while having a small size inside the carbon electrode material.

The above description will be given below in detail.

The second powder may include template powder. That is, the second powder may include powder for forming the template of the carbon electrode material.

In detail, the second powder may include powder having a porous structure. For example, the second powder may include a metal-organic framework (MOF).

The metal-organic framework (MOF) can be defined as a porous organic-inorganic compound in which a central transition metal ion is bonded to an organic ligand and is uniformly distributed to form pores with a size of several nm and refers to a crystalline compound containing both organic and inorganic materials in the frame and having a nano-sized pore structure.

Accordingly, the carbon electrode material formed using the template may have a high specific surface area by the porous structure, thereby increasing a surface area of the metal catalyst supported inside the template.

In detail, a carbon electrode material prepared using the following synthesis process may have a specific surface area of 400m²/g to 1000m²/g.

For example, the second powder may include basolite including zinc (Zn) as a central transition metal ion.

As the second powder as the template powder includes basolite including zinc (Zn), the process of the carbon electrode material may be easily performed.

That is, the Zn may be volatilized at a synthesis process temperature of the mixed powder described below and metal of the third powder described below may be bonded to a site to which the Zn was bonded, and thus a separate process of pretreatment the template may not be required, and accordingly, the preparation process of the carbon electrode material may be easily performed.

Conventionally, since there is no site for metal ions of a metal precursor to enter the template powder, a template carbon composite is prepared, a template is removed, and then the carbon composite and the metal precursor are heat-treated to support metal inside the carbon composite.

However, in the method of preparing the carbon electrode material according to an embodiment, the shape of the metal-organic framework (MOF) of the template powder may collapse while the Zn is volatilized in the synthesis process of the mixed powder, and a site for metal ions to enter the template powder may be generated, and accordingly, a separate process of removing a template may not be required.

The third powder may include metal precursor powder. In detail, the third powder may include powder including at least one metal precursor of cobalt (Co), nickel (Ni), copper (Cu), ruthenium (Ru), rhodium (Rh), palladium (Pd), silver (Ag), iridium (Ir), platinum (Pt), or gold (Au).

The first powder, the second powder, and the third powder may be used to form the mixed powder through a mixing process. For example, the first powder, the second powder, and the third powder may be mixed to recover the mixed powder using a method such as a ball mill or an attrition bill, and the mixed powder may be filtered by a sieve and may be recovered.

The first powder, the second powder, and the third powder may be in a constant range of wt % based on the total weight of the mixed powder.

The first powder may be in 20 wt% or less based on the total weight of the mixed powder. In detail, the first powder may be in 10 wt% to 20 wt% based on the total weight of the mixed powder.

When the first powder, that is, the carbon precursor powder is less than 10 wt% based on the total weight of the mixed powder, the strength of a carbon support of the carbon electrode material may be lowered. When the carbon precursor powder is more than 15 wt% based on the total weight of the mixed powder, the catalytic properties of the carbon electrode material may be degraded.

The second powder may be equal to or less than 80 wt% based on the total weight of the mixed powder. In detail, the second powder may be in the range of 50 wt% to 80 wt% based on the total weight of the mixed powder.

When the second powder, that is, the template powder is less than 50 wt% based on the total weight of the mixed powder, a specific surface area of the carbon electrode material may be reduced, and the bonding properties of the metal may be degraded, and accordingly, it may be impossible to stably bind nanometer or monoatomic size metal.

When the template powder is more than 75 wt% based on the total weight of the mixed powder, the catalytic properties of the carbon electrode material may be degraded.

The second powder may be equal to or less than 80 wt% based on the total weight of the mixed powder. In detail, the second powder may be in the range of 50 wt% to 75 wt% based on the total weight of the mixed powder.

The third powder may be equal to or less than 10 wt% based on the total weight of the mixed powder. In detail, the third powder may be in the range of 0.1 wt% to 5 wt% based on the total weight of the mixed powder.

When the third powder, that is, the metal precursor powder is less than 0.1 wt% based on the total weight of the mixed powder, the catalytic properties of the carbon electrode material may be degraded.

When the metal precursor powder is more than 5 wt% based on the total weight of the mixed powder, process efficiency may be reduced by residual metal and bonded large metal.

The first powder, the second powder, and the third powder may be mixed to form the mixed powder, and then a process of synthesizing the mixed powder may proceed.

In detail, the mixed powder is heat-treated at a temperature of about 900°C to 1100°C in a nitrogen or argon atmosphere. Then, the carbon electrode material synthesized by the mixed powder is prepared through a cooling process at room temperature for about 1 hour.

As described above, the carbon electrode material according to an embodiment may not require a separate process of removing a template, thereby improving process efficiency.

That is, a site to which metal ion is bonded is generated while Zn of the template powder is volatilized, and thus a separate process of removing a template may not be required.

Thus, the carbon electrode material may be prepared using a process of mixing the carbon precursor powder, the metal precursor powder, and the template powder at one time and heat-treating the mixed powder once, and thus the preparation of the carbon electrode material may be simplified.

Since metal ion is bonded to a site of the template powder from which Zn is volatilized, the metal ion may be stably supported inside the carbon electrode material, thereby improving the properties of the carbon electrode material.

Hereinafter, the present disclosure will be described in detail through a method of preparing a carbon electrode material with reference to the following examples and comparative examples. However, these preparation examples are merely presented as an example in order to explain the present disclosure in more detail. Therefore, the present disclosure is not limited to these preparation examples.

### Example 1

Basolite powder, o-phenanthroline (1,10-phenanthrolin) powder, and metal precursor powder were prepared.

In this case, the metal precursor powder includes ruthenium acetylacetonate.

Then, the basolite powder, the o-phenanthroline (1,10-phenanthrolin) powder, and the metal precursor powder were mixed through a ball mill mixing method at about 200 rpm to 400 rpm for 3 hours.

In this case, the basolite powder was 80 wt% based on the total weight of the mixed powder, the o-phenanthroline (1,10-phenanthrolin) powder was 18 wt% based on the total weight of the mixed powder, and the metal precursor powder was 2 wt% based on the total weight of the mixed powder.

Then, after being filtered and recovered by a sieve, the mixed powder was inserted into a furnace heat at a temperature of 900°C to 1100°C and was heated for about 1 hour.

Then, after a cooling process was performed at room temperature for about 1 hour, a carbon electrode material including ruthenium (Ru) was prepared.

Then, presence of ruthenium (Ru) in the prepared carbon electrode material was seen via high-resolution electron microscope (HAADF-STEM) analysis and XAFS analysis.

### Example 2

A carbon electrode material was prepared and then presence of ruthenium (Ru) in the prepared carbon electrode material was seen via high-resolution electron microscope (HAADF-STEM) analysis and XAFS analysis in the same manner as Example 1 except that rhodium acetate was used as the metal precursor powder.

### Example 3

A carbon electrode material was prepared and then presence of ruthenium (Ru) in the prepared carbon electrode material was seen via high-resolution electron microscope (HAADF-STEM) analysis and XAFS analysis in the same manner as Example 1 except that iridium acetate was used as the metal precursor powder.

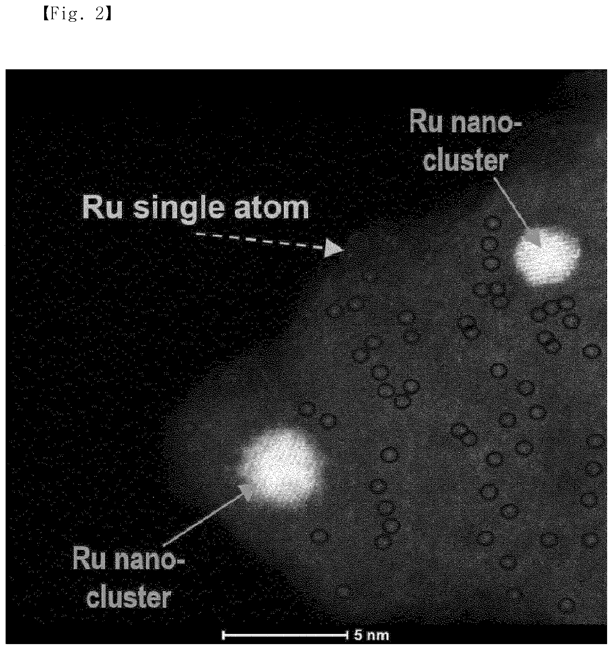

Fig. 2 is a diagram showing an image obtained by analyzing the carbon electrode material of Example 1 using a high-resolution electron microscope (HAADF-STEM).

As seen from Fig. 2, monoatomic size ruthenium and ruthenium with a size equal to or less than 5 nm coexist inside the carbon electrode material of Example 1.

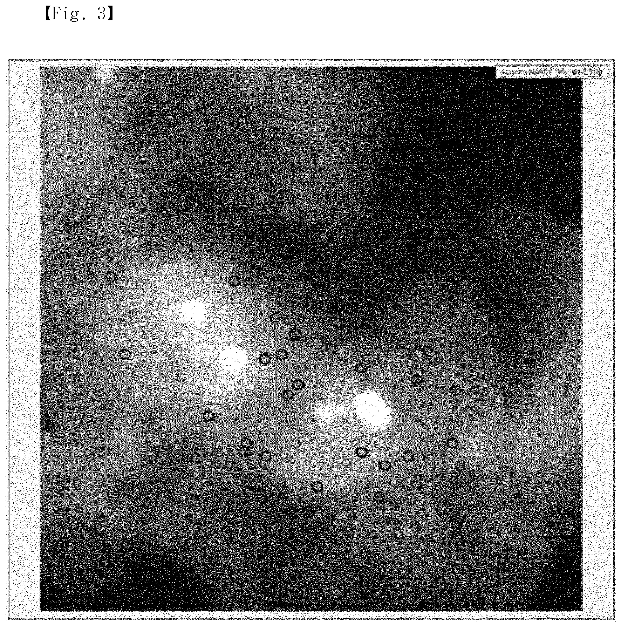

Fig. 3 is a diagram showing an image obtained by analyzing the carbon electrode material of Example 2 using a high-resolution electron microscope (HAADF-STEM).

As seen from Fig. 3, monoatomic size rhodium and rhodium with a size equal to or less than 5 nm coexist inside the carbon electrode material of Example 2.

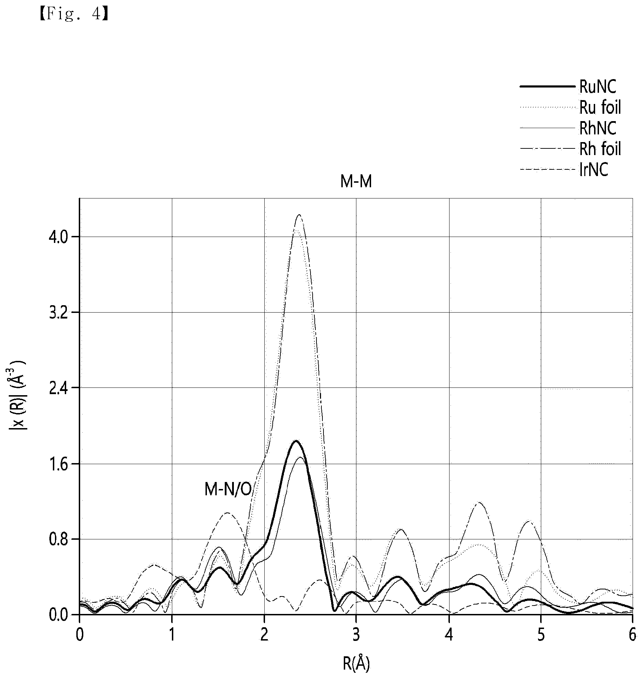

Figs. 4 to 8 are diagrams showing an XAFS analysis result of a carbon electrode material according to an embodiment.

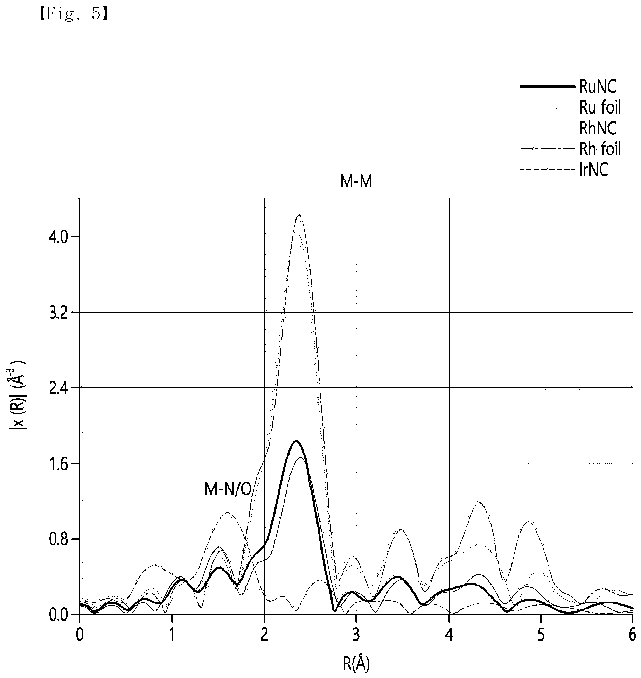

Figs. 4 and 5 are graphs showing an XAFS analysis result of the carbon electrode material of Example 1.

As seen from Figs. 4 and 5, ruthenium alone, ruthenium bonded to nitrogen, and ruthenium single atoms stabilized with an o-ligand coexist inside the carbon electrode material of Example 1.

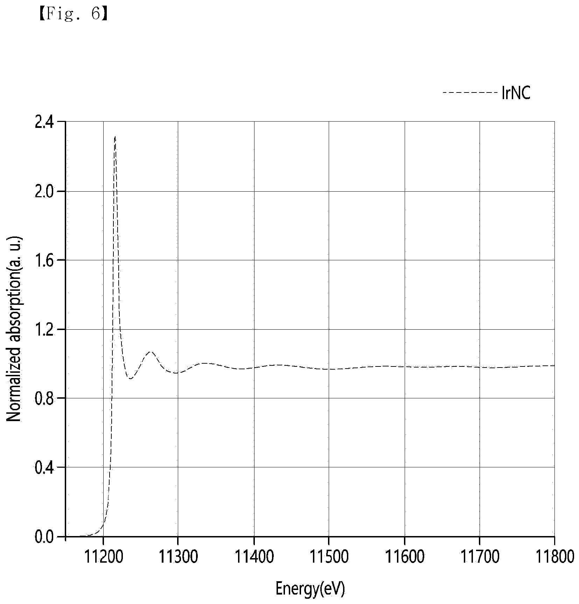

Fig. 6 is a graph showing an XAFS analysis result of the carbon electrode material of Example 3.

As seen from Fig. 6, iridium bonded to nitrogen coexist inside the carbon electrode material of Example 3.

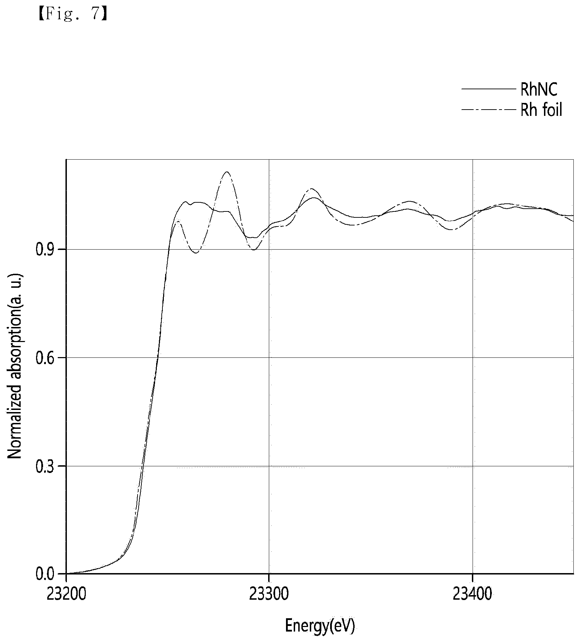

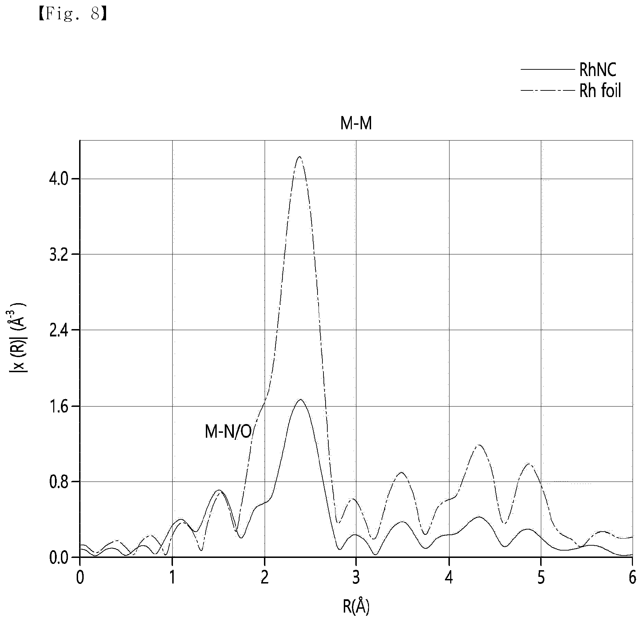

Figs. 7 and 8 are graphs showing an XAFS analysis result of the carbon electrode material of Example 2.

As seen from Figs. 7 and 8, rhodium alone, rhodium bonded to nitrogen, and rhodium single atoms stabilized with an o-ligand coexist inside the carbon electrode material of Example 2.

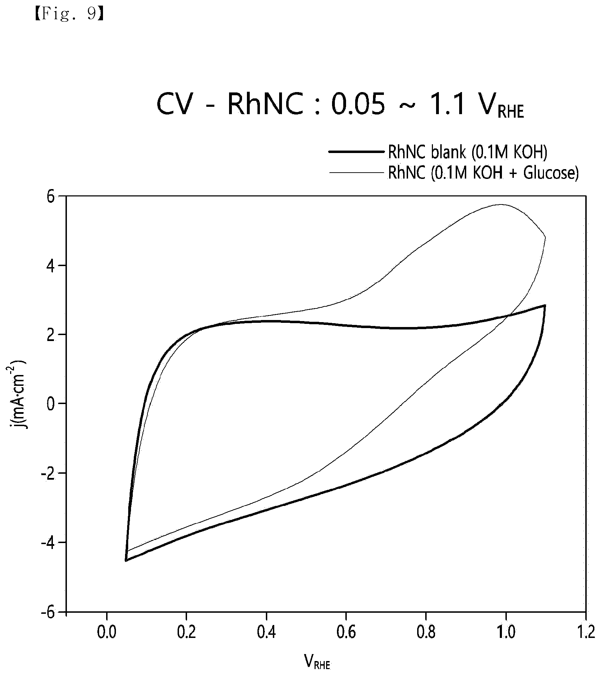

Fig. 9 is a graph showing a glucose oxidation reaction experiment for explaining the catalytic properties of the carbon electrode material of Example 2.

Referring to Fig. 9, CV (current density according to voltage change) of only an electrolyte to which glucose is not added is indicated by black color, and CV (current density according to voltage change) of an electrolyte to which glucose is added is indicated by red color.

As seen from Fig. 9, when glucose is added to an electrolyte, current density is increased by glucose oxidation.

That is, the carbon electrode material of Example 2 has high activity with respect to glucose oxidation.

Features, structures, effects, etc. described in the above-described embodiments are included in at least one embodiment of the present disclosure, and are not necessarily limited to only one embodiment. Features, structures, effects, etc. illustrated in each embodiment may be combined or modified with respect to other embodiments by those of ordinary skill in the art to which the embodiments pertain. Accordingly, the contents related to such combinations and modifications needs to be interpreted as being included in the scope of the present disclosure.

While the present disclosure has been particularly shown and described with reference to exemplary embodiments thereof, it will be understood by those skilled in the art that various changes in form and details may be made therein without departing from the spirit and scope of the present disclosure as defined by the appended claims. The exemplary embodiments should be considered in descriptive sense only and not for purposes of limitation. Therefore, the scope of the present disclosure is defined not by the detailed description of the present disclosure but by the appended claims, and all differences within the scope will be construed as being included in the present disclosure.

## Claims

1. A method of preparing a carbon electrode material, the method comprising:
forming mixed powder by mixing carbon precursor powder, template powder, and metal precursor powder; and
forming a nitrogen-doped carbon composite by heat-treating the mixed powder,
wherein the template powder includes a metal-organic framework (MOF), and
wherein monoatomic or nanometer size metal is supported on the carbon composite.

2. The method of claim 1, wherein the metal precursor powder includes at least one of cobalt (Co), iron (Fe), manganese (Mn), chromium (Cr), nickel (Ni), copper (Cu), ruthenium (Ru), rhodium (Rh), palladium (Pd), silver (Ag), iridium (Ir), platinum (Pt), or gold (Au).

3. The method of claim 1, wherein the template powder includes basolite.

4. The method of claim 1, wherein the second powder includes basolite including zinc (Zn) as a central transition metal ion, and
wherein the zinc (Zn) is replaced by the metal in the heat-treating the mixed powder.

5. The method of claim 1, wherein the carbon composite has a specific surface area of 400 m²/g to 1,000 m²/g.

6. The method of claim 1, wherein the mixed powder is heat-treated at a temperature of 900°C to 1,100°C.

7. The method of claim 1, wherein the carbon precursor powder are in the range of 10 wt% to 20 wt% based on a total weight of the mixed powder,
wherein the template powder are in the range of 50 wt% to 80 wt% based on the total weight of the mixed powder, and
wherein the metal precursor powder are in the range of 0.1 wt% to 5 wt% based on the total weight of the mixed powder.

8. A carbon electrode material prepared using the method of any one of claims 1 to 7.
